# EUROPEAN PATENT APPLICATION

(11) **EP 1 338 920 A1**
(43) Date of publication of application: **27.08.2003**
(21) Application number: 03003462.3
(22) Date of filing: 14.02.2003
(51) Int. Cl.: G03D 15/00, G03D 15/04, G03B 27/32

(54) **Photographic film developing and scanning apparatus**

(30) Priority: 20.02.2002 JP 2002043614
(71) Applicant: Phogenix Imaging, LLC, San Diego, California 92127-1815 (US)
(72) Inventor: Tani,Masayuki, Hyogo (JP)
(74) Representative: Preissner, Nicolaus, Dipl.-Ing.

(57) **Abstract**

An automatic photographing film developing and scanning apparatus includes a film developing portion (1) that automatically performs predetermined developing processing of a photographed non-developed film led by a leader, a film scanning portion (2) that scans a processed film developed by the film developing portion to generate a digitalized image and a film guide portion that guides the processed film to the film scanning portion, the film guide portion being disposed on a film transferring path between the film developing portion and the film scanning portion. The film guide portion (20) is provided with a leader cutting portion which cuts the leader from the processed film and a film stagnating portion which absorbs a film traveling speed difference between a film traveling speed in the film developing portion and that in the film scanning portion by temporarily slackening the processed film transferred from the film developing portion into a downwardly hanged loop before transferring the processed film to the scanning portion.

## Description

The present invention relates to an automatic photographic film developing and scanning apparatus. More specifically, the present invention relates to an apparatus that is integrally equipped with the so-called automatic photographic film developing device for automatically performing predetermined developing processing for a photographed non-developed film and a film scanner for automatically digitalizing an image of the processed film.

The so-called automatic film developing device that continuously and automatically performs predetermined developing processing, such as developing processing, bleaching processing, fixing processing, stabilizing processing and drying processing, for a photographed non-developed film is widely used.

In this developing device, the non-developed film passes through each processing portion in the automatic film developing device while being led by a leader attached to the tip end of the film to be subjected to the predetermined processing automatically.

On the other hand, the so-called photographic film scanner is also known. The film scanner digitalizes a photographed image of a processed film by scanning the film so that the photographed image taken by the so-called silver halide camera can be seen on a monitor of a personal computer, printed by a printer connected to a personal computer or transmitted as an E-mail.

Conventionally, the aforementioned automatic film developing device and the aforementioned film scanner are manufactured and used separately. Accordingly, in order to digitalize an image taken by a silver halide camera and saved in a photographic film, predetermined developing processing are performed by an automatic film developing device, thereby obtaining a processed film. Subsequently, the processed film is scanned by a film scanner, which is different from the film-developing device, to obtain a digitalized image.

Since the developing processing to be performed in an automatic film developing device includes chemical processing using chemical fluid, it takes a certain time to complete all of the processing. In other words, the traveling speed of the film in the automatic film developing device is comparatively slow. To the contrary, since the film scanner does not perform such chemical processing, the film can be transferred for the scanning at a speed faster than the traveling speed in the automatic developing device. Furthermore, the film scanner is designed to scan the film in a state that a leader attached to the leading edge of the film at the time of developing processing is detached. Accordingly, it is impossible to simply combine a conventional automatic film developing device and a conventional film scanner.

It is an object of the present invention to provide an automatic film developing and scanning apparatus in which an automatic film developing device and a film scanner are integrally combined.

Furthermore, it is another object of the present invention to provide an automatic film developing and scanning apparatus in which a subsequent film is not transferred to a scanning portion when a preceding film is being scanned or the scanning portion has a trouble.

An automatic photographing film developing and scanning apparatus according to the present invention includes a film developing portion that automatically performs predetermined developing processing for a photographed non-developed film led by a leader, a film scanning portion that scans a processed film developed by the film developing portion to generate a digitalized image, and a film guide portion that guides the processed film to the film scanning portion, the film guide portion being disposed on a film transferring path between the film developing portion and the film scanning portion, wherein the film guide portion is equipped with a leader cutting portion which cuts the leader from the processed film.

According to the aforementioned apparatus, since the film guide portion is equipped with a leader cutting portion that cuts the leader from the processed film, the processed film can be smoothly introduced into the film scanning portion and scanned therein.

In cases where the film guide portion is provided with a film stagnating portion which absorbs a film traveling speed difference between a traveling speed of a film in the film developing portion and that in the film scanning portion by temporarily slackening the processed film transferred from the film developing portion before transferring the processed film to the scanning portion, it becomes possible to employ a film scanning portion having a film traveling speed faster than that in the film developing portion.

It is preferable that the film stagnating portion stagnates the film temporarily by forming a downwardly hanged loop portion of the processed film.

Furthermore, in cases where a film traveling direction changing device is disposed on a film transferring path between the film developing portion and the film guide portion for changing a traveling direction of the processed film from a direction toward the film guide portion into a direction toward an outside of the film developing portion and vice versa, the processed film can be discharged to an outside of the film developing portion without suspending the operation of the film developing portion when a film different from a film transferred from the developing portion is being scanned or the scanning portion has a trouble.

Other objects and the features will be apparent from the following detailed description of the present invention with reference to the attached drawings.

The present invention will be more fully described and better understood from the following description, taken with the appended drawings, in which:

Fig. 1 is a schematic structural view showing an embodiment of an automatic film developing and scanning apparatus according to the present invention;

Fig. 2 is a vertical cross-sectional view showing the drying portion of the apparatus;

Fig. 3 is a vertical cross-sectional view showing the state that a processed film transferred from the upper space of a developing portion to a film guiding portion is stagnating at a film stagnating portion;

Fig. 4 is a vertical cross-sectional view showing the state that the processed film is being transferred to a film scanning portion after passing through the film stagnating portion; and

Fig. 5 is an enlarged vertical cross-sectional view showing the film guide portion.

A preferable embodiment of the present invention will be explained with reference to the attached drawings.

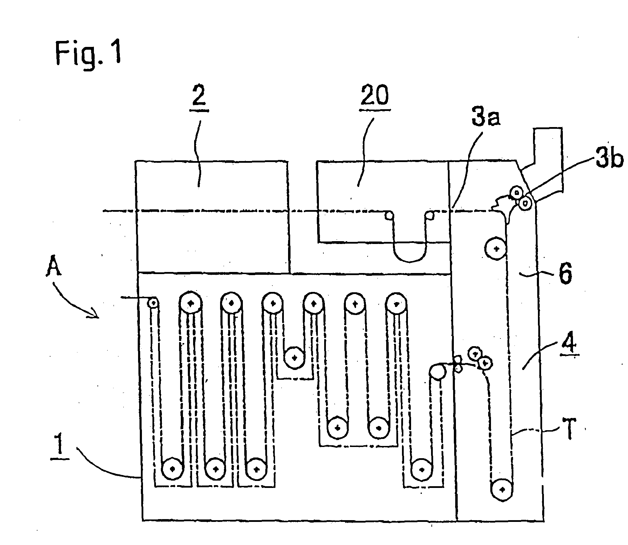

Fig. 1 shows a schematic structural view showing an embodiment of the automatic film developing and scanning apparatus A according to the present invention that conveys a film along a path T. This film developing and scanning apparatus A is provided with a film developing portion 1, a film guide portion 20 arranged on the upper right portion of the film developing portion 1 and a film scanning portion 2 arranged on the upper left portion of the film developing portion 1.

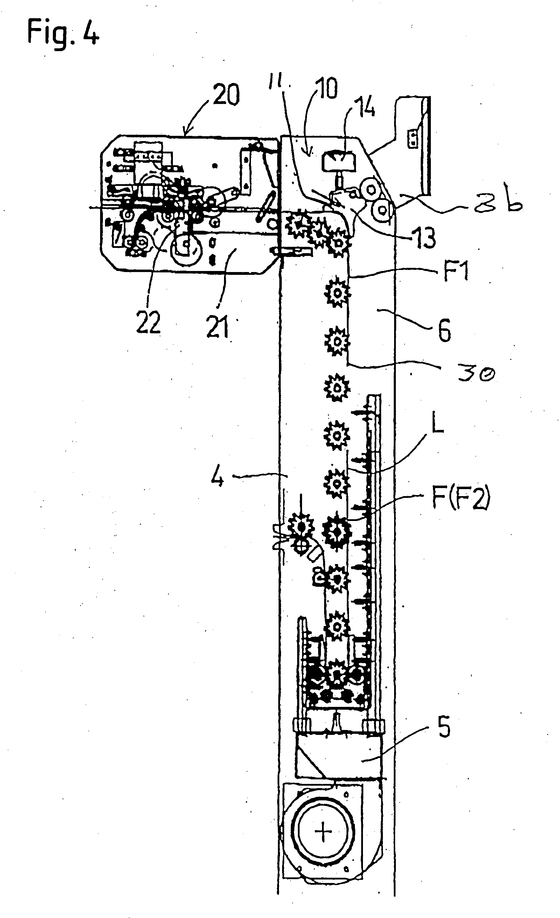

The film developing portion 1 continuously and automatically performs predetermined developing processing, such as developing processing, fixing processing, rinsing processing and drying processing, for the photographed undeveloped film led by a short leader L (Fig. 4).

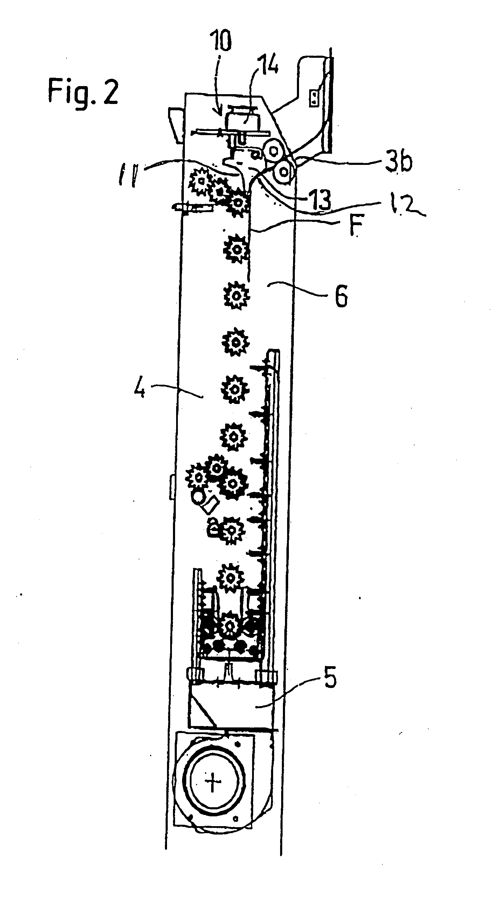

The final stage of this film developing portion 1 is a drying processing portion 4. As shown in Figs. 2 to 4, in the drying processing portion 4, the chemically processed film F is dried by the air sent from a dryer 5 installed at the lower portion of the drying processing portion 4 while being transferred upward.

The drying processing portion 4 has, at its upper end thereof, a film traveling direction changing device 10 for changing the traveling direction of the processed film F from the direction toward the film guide portion 20 into the direction toward an outside of the film developing portion 1 and vice versa.

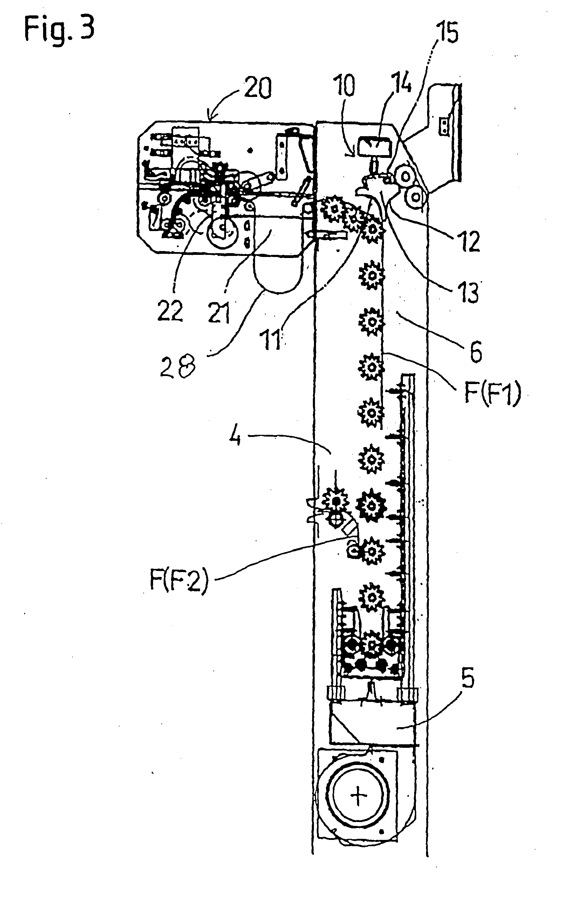

The film traveling direction changing device 10 includes, as main members, a guide member 13 having a first exit guiding surface 11 for guiding the leader L toward the film guide portion 20 and a second exit guiding surface 12 (Fig. 3) for guiding the leader L toward an outside of the film developing portion 1, a spring (not shown) for urging the guide member 13 clockwise, and a solenoid 14 for urging the guide member 13 against the rotational force of the spring counterclockwise. The guide member 13 is capable of swinging about the horizontal shaft 15.

In this embodiment, in the situation where the guide member 13 is urged by the spring in the clockwise direction without being urged by the solenoid 14 as shown in Fig. 2, the processed film F is directed not toward the film scanning portion 2 but toward the second exit 3b to be discharged to an outside of the film developing portion 1. Fig. 2 shows the state that the front half portion of the processed film F is discharged and the rear half thereof is guided by the second exit guiding portion 12 of the guide member 13.

On the other hand, when the guide member 13 is swung counterclockwise by the solenoid as shown in Figs. 3 and 4, the processed film F will be guided by the first exit guiding surface 11 of the guide member 13 and forwarded toward the film scanning portion 2.

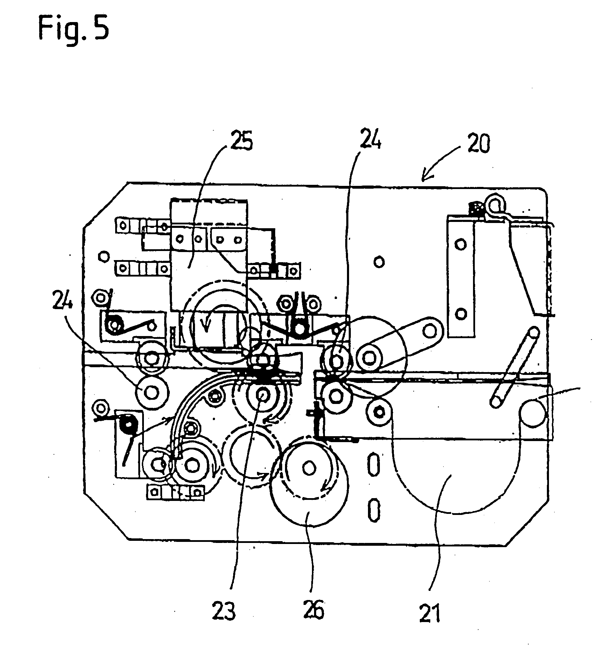

Figs. 1 and 5 show the film guide portion 20 disposed on the film transferring path T between the film developing portion 1 and the film scanning portion 2. As shown in Fig. 5, this film guide portion 20 is provided with a film stagnating portion 21 for temporarily stagnating the processed film F transferred from the film developing portion 1 before forwarding it to the film scanning portion 2 and a cutter 22 (see Figs. 3 and 4) for cutting the short leader L from the processed film F.

Furthermore, this film guide portion 20 is provided with a first leader sensor (not shown) for detecting the short leader L entered in the guide portion 20, leader rollers 23 for transferring and discharging the short leader L and its driving motor 26, film rollers 24 for transferring the film F separated from the short leader L and its driving motor (not shown).

The traveling speed of the leader L forwarded by the leader rollers 23 is set to the same traveling speed as that of the film in the film developing portion 1. The traveling speed of the film forwarded by the film rollers 24 is set to approximately the same traveling speed as that of the film in the film scanning portion 2. Furthermore, the driving motor 26 for driving the leader rollers 23 is controlled such that the motor stops a few seconds after the first leader sensor detects the short leader L.

Completing the film guide portion 20 is a second leader sensor (not shown) for detecting the short leader L separated from the film and a width guide 25 for guiding a processed film F to the film scanning portion 2. This width guide 25 can guide two kinds of films, a 35mm-film and a 24mm-film, by moving up and down. This width guide 25 is moved up and down in accordance with the rotation of the driving motor 26 or the film transferring motor, and therefore requires no special driving means.

Next, the operation of the aforementioned automatic film developing and scanning apparatus A will be explained.

First, a non-developed film with a short leader fixed at the tip end of the film is set to the automatic film developing portion 1. This photographic film is automatically transferred along the film transport path T and continuously subjected to the prescribed developing processing, such as developing processing, fixing processing, rinsing processing and drying processing, in the film developing portion 1 in the same manner as in a conventional developing device. In this embodiment, the film is a so-called 35mm-film capable of taking twelve images, and is sent to the film developing portion 1 at about 10 second intervals.

The film F with its leader L (Fig. 4) eventually passes upwards through the drying processing portion 4, which is the final processing portion of the developing process. When the film reaches the guide member 13 arranged at the upper space 6 above the drying processing portion 4, the processed film, identified as film F1 in Fig. 4, is guided by the first exit guiding surface 11 toward the film guide portion 20, and subsequently introduced to the film scanning portion 2.

The film scanning portion 2 is designed to scan a leaderless film. That is, prior to entering the scanning portion 2, the film leader L, which was attached to a film before subjecting it to the developing process, is detached from the film F. Accordingly, before introducing the film F into the film scanning portion 2, it is necessary to detach the leader L from the film F. Thus, in this embodiment, when the short leader L attached to the tip end of the film F entered in the film guide portion 20 is detected by the first leader sensor, the leader rollers 23 starts rotating in the transferring direction so as to transfer the leader L to the position where the leader L is to be detached, and then stops. Then, in this suspended state, the cutter 22 cuts the leader L from the film F.

After the leader L is cut, the leader transferring motor (driving motor) 26 starts rotating in the transferring direction again, and thereby the cut leader L is discharged to the lower receiving portion. When the discharge of the leader L is detected by the second leader sensor, the leader transferring motor 26 stops again. At this time, the width guide 25 is positioned so as to guide the 35mm-film.

Now, since the developing processing to be performed in the automatic film developing portion 1 includes chemical processing using chemical fluid, it takes a certain time to complete all of the processing. In other words, the traveling speed of the film in the film developing portion 1 is comparatively slow. To the contrary, since the film scanning portion 2 does not perform such chemical processing, the film F can be transferred for the scanning at a speed faster than the traveling speed in the film developing portion 1. Accordingly, in this embodiment, in order to absorb the film traveling speed difference between the film traveling speed in the film developing portion 1 and that in the film scanning portion 2, the film guide portion 20 is provided with a film stagnating portion 21 which adjusts the film traveling speed difference by temporarily slackening the film F. In detail, since the processed film F is continuously transferred by the transferring mechanism of the film developing portion 1 even if the leader transferring motor 26 is suspended, a downwardly hanged loop 28 of the film F is formed at the film stagnating portion 21 as shown in Fig. 3. When the loop is detected by the sensor, the transferring timing of the film F to the scanning portion 2 is determined, and the film driving motor starts rotating at the timing and the film F is transferred to the film scanning portion 2.

Thereafter, the film F will be transferred by the transferring mechanism of the film scanning portion 2.

Fig. 4 shows the state that the upper film F1 is being transferred to the film scanning portion 2. In this state, the rear end 30 of the upper film F1 is approaching the film traveling direction changing portion 10 in the upper space 6 of the drying processing portion 4, while the tip end portion of the leader L attached to the following (lower) film F2 advanced to the upper space 6 above the drying portion 4 is approaching the rear end of the upper film F1. However, since the upper film F1 is being transferred at the traveling speed twice the traveling speed of the film in the developing portion 1, the distance therebetween will not decrease but rather increase.

Accordingly, when the following (lower) film F2 approaches the film traveling direction changing device 10, the upper film F1 will have passed the guide member 13 completely. Therefore, in cases where the film scanning portion 2 has a trouble, the traveling direction of the following (lower) film F2 is changed by the film traveling direction changing device 10, and the film F2 is forwarded to the direction opposite to the film guide portion 20 and discharged to the outside of the film developing portion 1 via the second exit 3b. In detail, when a trouble occurs in the film scanning portion 2, the solenoid 14 releases the pressing of the guide member 13 upon the receipt of the trouble warning signal, causing the clockwise swing of the guide member 13. As a result, the second exit guide surface 12 of the guide member 13 guides the following film F2 toward the direction opposite to the film guide portion 20.

The terms and descriptions in this specification are used only for explanatory purposes and the present invention is not limited to these terms and descriptions. It should be appreciated that there are many modifications and substitutions without departing from the spirit and the scope of the present invention which is defined by the appended claims. The present invention permits any design-change, unless it deviates from the soul, if it is within the limits by which the claim was performed.

### List of Reference Signs

- 1: film developing portion
- 2: film scanning portion
- 3a: first exit
- 3b: second exit
- 4: drying processing portion
- 5: dryer
- 6: upper space
- 10: film traveling direction changing device
- 11: first exit guiding surface
- 12: second exit guiding surface
- 13: guide member
- 14: solenoid
- 15: horizontal shaft
- 20: film guide portion
- 21: film stagnating portion
- 22: cutter
- 23: leader rollers
- 24: film rollers
- 25: width guide
- 26: driving motor
- 28: loop
- 30: rear end

- A: film developing and scanning apparatus
- F: film
- F1: upper film
- F2: lower film
- L: leader
- T: path

## Claims

1. An automatic photographing film developing and scanning apparatus, comprising:
a film developing portion (1) that automatically performs predetermined developing processing for a photographed non-developed film (F) led by a leader (L);
a film scanning portion (2) that scans a processed film (F) developed by said film developing portion (1) to generate a digitized image;
a film guide portion (20) that guides said processed film (F) to said film scanning portion (2), said film guide portion (20) being disposed on a film transferring path (T) between said film developing portion (1) and said film scanning portion (2); and
said film guide portion (20) having a leader cutting portion (22) for cutting said leader (L) from said developed film (F).

2. The automatic photographing film developing and scanning apparatus as recited in Claim 1, **characterized in that** said predetermined developing processing include developing processing, bleaching processing, fixing processing, stabilizing processing and drying processing.

3. The automatic photographing film developing and scanning apparatus as recited in Claim 1 or 2, **characterized in that** said film guide portion (20) is provided with a film stagnating portion (21) which absorbs a film traveling speed difference between a film traveling speed in said film developing portion (1) and a film traveling speed in said film scanning portion (2) by temporarily slackening said processed film (F) transferred from said film developing portion (1) before transferring said developed film (F) to said scanning portion (2).

4. The automatic photographing film developing and scanning apparatus as recited in Claim 3, **characterized in that** said film stagnating portion (21) stagnates said film (F) temporarily by forming a downwardly hanged loop portion (28) of said developed film (F).

5. The automatic photographing film developing and scanning apparatus as recited in any of the Claims 1 to 4, **characterized by** a film traveling direction changing device (10) disposed on a film transferring path (T) between said film developing portion (1) and said film guide portion (20), wherein said film traveling direction changing device (10) changes a traveling direction of said processed film (F) from a direction toward said film guide portion (20) into a direction toward an outside of said film developing portion (1) and vice versa.

6. The automatic photographing film developing and scanning apparatus as recited in any of the Claims 1 to 4, **characterized by** a film traveling direction changing device (10) disposed on a film transferring path (T) between said film developing portion (1) and said film guide portion (20), wherein said film traveling direction changing device (10) is operable to selectively change a traveling direction of said processed film (F) from and between a direction toward said film guide portion (20) and a direction toward an outside of said film developing portion (1) and vice versa.

7. The automatic photographing film developing and scanning apparatus as recited in Claim 5 or 6, **characterized in that** said film traveling direction changing device (10) includes a guide member (13) having a first exit guiding surface (11) for guiding said leader (L) toward said film guide portion (20) and a second exit guiding surface (12) for guiding said leader (L) toward an outside of said film developing portion (1), said guide member (13) being capable of swinging about a fulcrum, a spring which urges said guide member (13) clockwise or counterclockwise, and a solenoid (14) which urges said guide member (13) against a rotational force of said spring counterclockwise or clockwise.

8. An automatic photographing film developing and scanning apparatus, comprising:
a film developing portion (1) that automatically performs predetermined developing processing including developing processing, bleaching processing, fixing processing, stabilizing processing and drying processing for a photographed non-developed film (F) led by a leader (L);
a film scanning portion (2) that scans a processed film (F) developed by said film developing portion (1) to generate a digitalized image;
a film guide portion (20) that guides said processed film (F) to said film scanning portion (2), said film guide portion (20) being disposed on a film transferring path (T) between said film developing portion (1) and said film scanning portion (2), and
a film traveling direction changing device (10) disposed on a film transferring path (T) between said film developing portion (1) and said film guide portion (20), said film traveling direction changing device (10) being selectively operable to change a traveling direction of said processed film (F) from and between a direction toward said film guide portion (20) and a direction toward an outside of said film developing portion (1),
said film guide portion (20) having a leader cutting portion (22) which cuts said leader (L) from said processed film, and
said film guide portion (20) having a film stagnating portion (21) which absorbs a film traveling speed difference between a film traveling speed in said film developing portion (1) and a film traveling speed in said film scanning portion (2) by temporarily slackening said processed film (F) transferred from said film developing portion (1) into a downwardly hanged loop (28) before transferring said processed film (F) to said scanning portion (2).

9. The automatic photographing film developing and scanning apparatus as recited in Claim 8, **characterized in that** said film traveling direction changing device (10) includes a guide member (13) having a first exit guiding surface (11) for guiding said leader (L) toward said film guide portion (20) and a second exit guiding surface (12) for guiding said leader (L) toward an outside of said film developing portion (1), said guide member (13) being capable of swinging about a fulcrum, a spring which urges said guide member (13) clockwise or counterclockwise, and a solenoid (14) which urges said guide member (13) against a rotational force of said spring counterclockwise or clockwise.
